# EUROPÄISCHE PATENTSCHRIFT

(11) **EP 1 173 688 B1**
(45) Veröffentlichungstag und Bekanntmachung des Hinweises auf die Patenterteilung: **25.08.2004**
(21) Anmeldenummer: 00926887.1
(22) Anmeldetag: 12.04.2000
(51) Int. Cl.: F16D 65/12

(54) **BREMSSCHEIBEN-NABENKOMBINATION UND ZWISCHENELEMENTE FÜR EINE BREMSSCHEIBEN-/NABENKOMBINATION**
BRAKE DISK-HUB COMBINATION AND INTERMEDIATE ELEMENTS FOR A BRAKE DISK-/HUB COMBINATION
COMBINAISON DISQUE DE FREINAGE-MOYEU, ET ELEMENTS INTERMEDIAIRES POUR CETTE COMBINAISON

(30) Priorität: 21.04.1999 DE 19918069
(43) Veröffentlichungstag der Anmeldung: 23.01.2002
(73) Patentinhaber: KNORR-BREMSE SYSTEME FÜR NUTZFAHRZEUGE GMBH, 80809 München (DE)
(72) Erfinder: BAUMGARTNER, Hans, D-85368 Moosburg (DE); PAHLE, Wolfgang, D-74080 Heilbronn (DE)
(86) Internationale Anmeldenummer: PCT/EP2000/003277
(87) Internationale Veröffentlichungsnummer: WO 2000/063575

(56) Entgegenhaltungen:
- DE-A- 19 726 674
- DE-C- 19 544 559
- GB-A- 2 093 949

## Beschreibung

Die Erfindung betrifft eine Bremsscheiben-Nabenkombination nach dem Oberbegriff des Anspruches 1 und Zwischenelemente für eine derartige Bremsscheiben-Nabenkombination.

Eine Bremsscheibe mit den gattungsgemäßen Merkmalen, also eine innenbelüftete Bremsscheibe mit zwei Reibringen nebst zugehöriger Bremsscheibennabe, sind aus dem deutschen Patent DE 195 44 559 C1 bekannt. Zur Verbindung der Bremsscheibe mit der Bremsscheibennabe sind bei dieser Bremsscheibe Zwischenelemente zur Drehmoment- und Kraftübertragung von den Nocken der Bremsscheibennabe auf die Abstützelemente der Bremsscheibe vorgesehen, welche z.B. durch Bolzen an den Nocken der Bremsscheibennabe befestigbar sind. Dabei greifen einerseits die Nocken der Bremsscheibennabe in die Zwischenelemente und andererseits die Zwischenelemente in die Abstützelemente ein, so daß in beiden Drehrichtungen eine sichere Drehmomentübertragung von der Bremsscheibe auf die Bremsscheibennabe gewährleistet ist.

Die Bremsscheibe der DE 195 44 559 C1 hat sich an sich bewährt, wünschenswert ist aber eine weiter vereinfachte Montage bei niedrigen Herstell- und Materialkosten. Vorzugsweise soll bei der Montage eine rostanfällige Schraubverbindung vermieden werden. Der Lösung dieses Problems widmet sich die Erfindung durch die Schaffung besonders vorteilhafter Zwischenelemente.

Die Erfindung löst dieses Problem durch die Gegenstände der Ansprüche 1 und 16.

Vorteilhafte Ausgestaltungen sind den Unteransprüchen zu entnehmen.

Die streifenförmigen Zwischenelemente sind aufgrund ihrer einfachen Geometrie äußerst einfach herstellbar - z.B. werden sie aus einem Stahlblech ausgestanzt und wenn möglich entsprechend zu ihrer Geometrie nur einmal nachgebogen - und ermöglichen insbesondere mit der Idee einer Sprengringsicherung, also durch einen in eine Nut der Bremsscheibennabe eingreifenden Sprengring eine äußerst einfache Montage. Die Sprengringsicherung gewährleistet ferner auf einfache Weise eine axiale Fixierung sowohl der Zwischenelemente als auch der Bremsscheibe auf der Bremsscheibennabe.

Durch das Grundprinzip der vorzugsweisen Faltung der Zwischenelemente ergibt sich eine weitere Temperaturbarriere. Die Faltung trägt somit in entscheidender Weise zur Minimierung des Wärmeüberganges zwischen Bremsscheibennabe und Bremsscheibe bei.

Bei einer Ausbildung als L- oder T-förmiges Element übernimmt der in den Spalt ragende Streifenabschnitt jeweils die Funktion der Wärmeleitungsbarriere. Durch die Grundabschnitte des L oder des T wird zudem auf einfache Weise jeweils ein definierter axialer Sitz der Zwischenelemente erreicht.

Werden die gefalteten Abschnitte der Zwischenelemente zudem federnd vorgespannt, ergibt sich durch das Prinzip der Faltung in Verbindung mit der Federung der Zwischenelemente die überraschende Doppelfunktion einer Wärmeleitungsbarriere und eines besseren Ausgleichs der Maßtoleranzen zwischen Bremsscheibe und Bremsscheibennabe.

Nach einer weiteren vorteilhaften Ausführungsform der Erfindung kann der Wärmeübergang im Zwischenspalt zweckmäßig durch eine zusätzliche Oberflächenbeschichtung und/oder eine zusätzliche Dämmschicht im Bereich des Zwischenspaltes weiter reduziert werden.

Bei einer weiteren vorteilhaften Ausführungsform der Erfindung wird eine Sprengringsicherung auf beiden Seiten der Bremsscheibe realisiert. In diesem Fall können ggf. alle aus dem Zwischenraum zwischen den Nocken und den Abstützelementen vorstehenden Abschnitte der Zwischenelemente entfallen.

Zur Verminderung der Wärmeleitfähigkeit und zur Gewährleistung einer guten Kraftübertragung zwischen Bremsscheibe und Bremsscheibennabe ist es zudem zweckmäßig, wenn die Zwischenelemente aus einem druckfesten Material bestehen, welches eine geringere Wärmeleitfähigkeit als die Bremsscheibe aufweist.

Nach einer weiteren besonders bevorzugten Ausführungsform der Erfindung sind die streifenförmigen Zwischenelemente als Blechumformteile ausgebildet, die besonders unkompliziert und preiswert herstellbar sind.

Werden die Zwischenelemente nur einseitig durch eine Sprengringssicherung gehalten, werden die Zwischenelemente vorteilhafterweise in einem ihrer Endbereiche jeweils mit einem Vorsprung oder einer federnden Schnappnase versehen, die zum Eingriff/Hintergriff einer mit der Schnappnase zusammenwirkenden Ausnehmung, Hinterschneidung oder Nut an der Bremsscheibennabe ausgelegt sind, wodurch die axiale Sicherung der Zwischenelemente in einer Richtung durch den Vorsprung und in der anderen Richtung durch die Vorsprünge, insbesondere die Schnappnase erfolgt.

Alternativ kann die axiale Sicherung der Zwischenelemente in beiden axialen Richtungen in konstruktiv einfacher Weise durch einen durch Nuten in den Nocken der Bremsscheibennabe und durch Nuten oder Ausnehmungen der Zwischenelemente hindurchgeführten, umlaufenden Sprengring erfolgen.

Nach einer weiteren bevorzugten Ausführungsform ist wenigstens einer der Nocken der Bremsscheibennabe mit einem radial nach außen vorstehenden Bund versehen, welcher die auf die Bremsscheibennabe gesetzte Bremsscheibe zu einer Seite hin axial sichert. Der Bund wirkt mit einem Ansatz der Bremsscheibe zusammen, welcher durch eine Abstufung am Innenumfang der Bremsscheibe entsteht. Auch nach längerem Betrieb unter hoher Belastung ist es noch leicht möglich, die Bremsscheibe von der Radnabe zu demontieren. Darüber hinaus können die axialen Befestigungsmittel "Bund am Nocken" und "abgestufter Bremsscheibeninnenumfang" bei der Herstellung der Bremsscheibennabe und der Bremsscheibe ausgeformt werden, so daß separate Befestigungsmittel zumindest für eine der beiden axialen Richtungen entfallen. Vorzugsweise ist daher der wenigstens eine Bund einstückig an die axialen Endbereiche der Nocken angeformt.

Weitere vorteilhafte Varianten der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
Fig. 1 eine Explosionsansicht einer erfindungsgemäßen Bremsscheiben-/Nabenkombination;
Fig. 2 eine teilgeschnittene Ansicht der Bremsscheibe aus Fig. 1 nebst Zwischenelementen analog zu Fig. 1;
Fig. 3 eine perspektivische Ansicht einer auf eine Bremsscheibennabe montierten Bremsscheibe nach Art der Fig. 1;
Fig. 4 eine Querschnittsansicht der auf die Bremsscheibennabe montierten Bremsscheibe nach Fig . 3;
Fig. 5 eine Draufsicht der auf die Bremsscheibennabe montierten Bremsscheibe nach Fig . 3;
Fig. 6-14 verschiedene erfindungsgemäße Zwischenelemente für eine Bremsscheiben-/Nabenkombination.

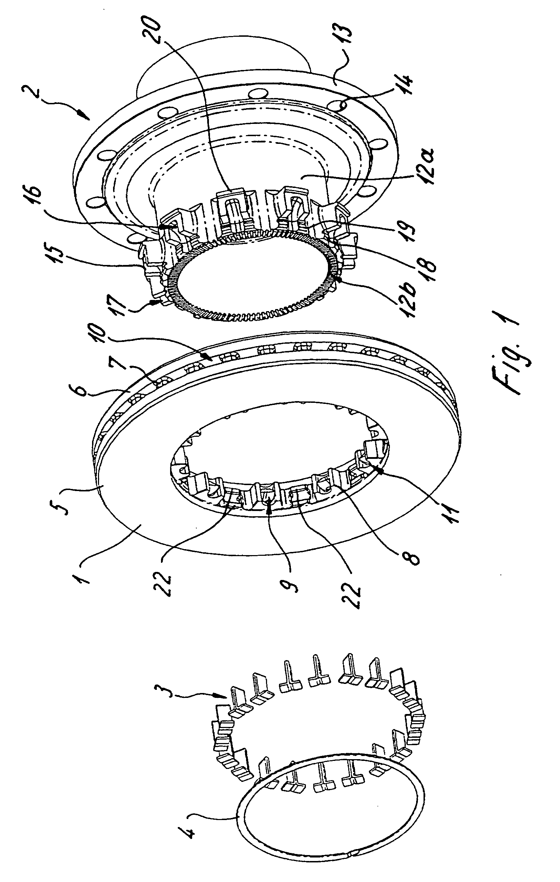

Fig. 1 zeigt die Sprengansicht einer Scheiben-/Nabenkombination mit einer Bremsscheibe 1 (vorzugsweise wird diese in hier nicht gezeigter, an sich bekannter Weise geteilt ausgeführt), einer Rad- und Bremsscheibennabe 2, einer Vielzahl von Zwischenelementen 3 und einem Sicherungs-Sprengring 4. Die Rad- und Bremsscheibennabe 2 muß nicht unbedingt einstückig mit bzw. nicht gleichzeitig auch als Radnabe ausgebildet sein, sondern sie kann auch zum Aufschieben auf eine separate hohlzylindrische Radnabe (hier nicht dargestellt) dienen, was bei verschiedenen Radnabenausführungen fertigungstechnisch vorteilhaft sein kann.

Die insbesondere für schwere Nutzfahrzeuge über 7,5t mit pneumatischen Scheibenbremsen geeignete, innenbelüftete Bremsscheibe der Fig. 1 weist zwei Reibringe 5, 6 auf, die über Stege 7 miteinander verbunden sind. An den Innenumfang der Bremsscheibe 1 sind Abstützelemente 8 angeformt, welche im wesentlichen trapezförmig vom Innenumfang der Reibringe 5, 6 nach innen vorstehen und zur Zufuhr von Kühlluft in das Innere der Bremsscheibe 1 von sich im wesentlich radial durch die Abstützelemente 8 hindurch erstreckenden Öffnungen 9 durchsetzt sind, welche die Zuleitung von Kühlluft in den Luftspalt 10 zwischen den beiden Reibringen 5, 6 erlauben und die zur Mitte der Bremsscheibe hin in axialen Ausnehmungen 11 enden, so daß während der Fahrt eine Kühlluftzufuhr durch die Abstützelemente 8 hindurch in den Luftspalt 10 zwischen den Reibringen 5. 6 möglich ist.

Die Radnabe 2 der Fig. 1 bis 5 weist einen topfartigen, hohlzylindrischen Abschnitt 12 mit einem scheibenartigen Abschnitt 13 mit Bohrungen 14 auf. An das von dem scheibenartigen Abschnitt 13 abgewandte axiale Ende des hohlzylindrischen Abschnittes 12 schließt sich ein weiterer axialer, hohlzylindrischer Endabschnitt 14 an, an dessen Außenumfang radial nach außen vorstehende Nocken 15 verteilt sind.

Die radial nach außen vorstehenden Nocken 15 sind in Draufsicht auf den Außenumfang der Scheibennabe 2 U-förmig, wobei zwischen den Schenkeln des U ein Luftkanal 16 ausgebildet ist, welcher von der radialen Außenseite der Nocken 15 geneigt zur Radialen der Bremsscheibennabe 2 verläuft, wobei sich der Grundschenkel des U zum Bremsscheibennabeninneren hin verbreitert. Der Luftkanal 16 endet in einer axialen Öffnung 17 an dem der Bremsscheibe 1 zugewandten axialen Ende der Bremsscheibennabe 2. Auf diese Weise ist eine Luftzufuhr von der axialen Stirnseite der Bremsscheibennabe 2 durch die Nocken 15 hindurch bis in den Luftspalt 10 der Bremsscheibe realisierbar.

Die Öffnung bzw. Ausnehmung 17 an der Stirnseite der Bremsscheibennabe 2 grenzt an einen umlaufenden Ansatz 18 (mit stirnseitiger ABS-Polradverzahnung) an, der an seinem Außenumfang mit einer umlaufenden Ringnut 19 versehen ist. Wie ferner in Fig. 1 zu erkennen, sind die Nocken 15 der Bremsscheibennabe 2 jeweils mit einem radial nach außen vorstehenden Bund 20 versehen, welcher die Grundseite der U-förmigen Nocken 15 teilweise radial nach außen verlängert.

Wie aus dem Zusammenspiel der Fig. 1 bis 5 zu erkennen, ist die Bremsscheibe 1 auf die Bremsscheibennabe 2 axial aufschiebbar, wobei die Nuten 15 und die Abstützelemente 8 im Umfangsrichtung ineinander greifen. In die zwischen den Nocken 15 und den Abstützelementen 8 verbleibenden Zwischenräume 21 (siehe Fig. 5) werden die gefalteten "Beine" der T-fömigen Zwischenelemente 3 eingeschoben. Bei einer Bremsung wird das Bremsmoment von den Abstützelementen 8 der Bremsscheibe 1 über die Zwischenelemente 3 auf die Nocken 15 der Bremsscheibennabe 2 weitergeleitet. Die Zwischenelemente 3 dienen dabei insbesondere auch in vorteilhafter Weise als Temperaturbarriere zwischen den Nocken 15 der Bremsscheibennabe 2 und der Bremsscheibe 1.

Die axiale Sicherung der Bremsscheibe 1 auf den Nocken 15 der Bremsscheibennabe 2 erfolgt auf einer Seite der Bremsscheibe durch die bereits beschriebenen Bünde 20 auf den Nocken 15 der Bremsscheibennabe die an radial nach innen angeformten Bünde 22 der Bremsscheibe anliegen. Zur der gegenüberliegenden axialen Seite hin wird die Bremsscheibe durch den in die Nut 19 eingelegten Sprengring 4 axial gesichert. Der axiale Sprengring sichert darüberhinaus auch die T-förmigen Zwischenelemente 3 gegen ein axiales Ausfallen. Der "Dachabschnitt" des T-förmigen Zwischenelemente verhindert ein Ausfallen der Zwischenelemente zur gegenüberliegenden Seite hin. Durch die Auffaltung des "T" ergibt sich eine einfache Möglichkeit zum Ausgleich von Maßtoleranzen, ferner wird eine zusätzliche Temperaturbarriere zwischen der Bremsscheibe 1 und der Nabe 2 geschaffen.

Fig. 6a und 6b zeigen perspektivische Ansichten der T-förmigen Zwischenelemente 3 aus Fig. 1 bis 5. Dabei sind die in die Zwischenräume 21 (siehe Fig. 5) ragenden Abschnitte der Zwischenelemente 3 gefaltet ausgebildet. Das Bein des T besteht somit aus zwei aneinanderliegenden (Streifen-)Abschnitten 3a, 3b, an das sich jeweils rechtwinklig die Dachabschnitte 3c, 3d anschließen. Durch eine Auffederung in der Falzung 3e ergibt sich zwischen den Streifenabschnitten 3a, 3b ein Winkel α, welcher zum Ausgleich von Toleranzen beim Zusammenstecken von Bremsscheibe 1 und Nabe 2 dient (federnde Vorspannung). In den dadurch entstehenden Spalt zwischen den Streifenabschnitten 3a, 3b kann ein Wärmedämmelement gesetzt werden (hier nicht zu sehen). Durch die T-Form entfällt die Notwendigkeit eines zweiten Sprengringes zur Sicherung der Zwischenelemente. Diese Ausführungsform empfiehlt sich insbesondere, wenn die eigentliche Bremsscheibe 1 bereits durch Bünde der Nocken oder durch eine äquivalente Maßnahme axial gesichert ist. Die Abschnitte 3c, 3d vereinfachen zudem die Handhabung der Zwischenelemente, da sie ggf. zum Beispiel das Ansetzen einer Zange zum Herausziehen erlauben, wenn die Zwischenelemente beim Bremsscheibenwechsel doch etwas klemmen sollten. Fig. 6b gibt den eingebauten Zustand wieder, in dem der Winkel α bis auf Null Grad verringert werden kann.

Eine vereinfachte Ausführungsform der Zwischenelemente ist in Fig,7 dargestellt. Bei dieser Ausführungsform wird quasi das "Dach" des T fortgelassen. In diesem Fall besteht das Zwischenelement also nur noch aus einem einfach gefalteten Blechstreifen, der in den Zwischenraum 6 gesteckt werden kann (nicht dargestellt). In diesem Fall ist auf beiden axialen Endseiten der Bremsscheibe eine axiale Sprengringsicherung vorzusehen. Diese Ausführungsform bietet sich an wenn keine Bünde 20 auf den Nocken 15 der Nabe 2 die Bremsscheibe 1 axial sichern.

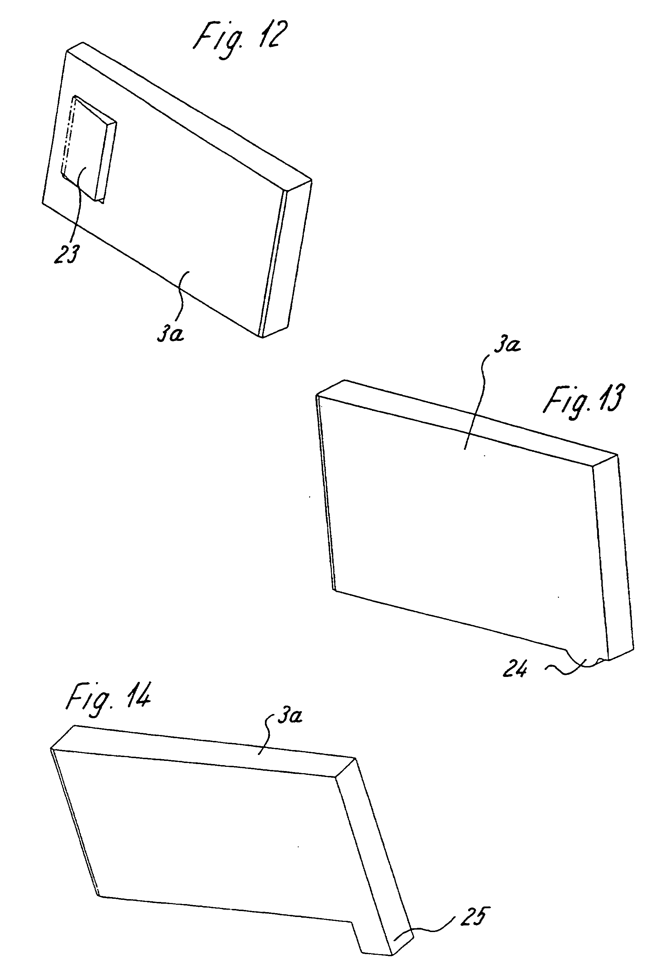

Nach Fig. 8 ist einseitig eine federnde Nase 23 am gefalteten Blechstreifen-Zwischenelement vorgesehen, welche das Zwischenelement in einer Richtung gegen das Ausfallen sichert. Die gegenüberliegende axiale Sicherung kann durch einen Sprengring 4 realisiert werden. Ein zweiter Sprengring kann entfallen, wenn die axiale Sicherung der Bremsscheibe auf andere Weise erfolgt (z.B. durch die bereits erwähnte Bünde auf den Nocken 15).

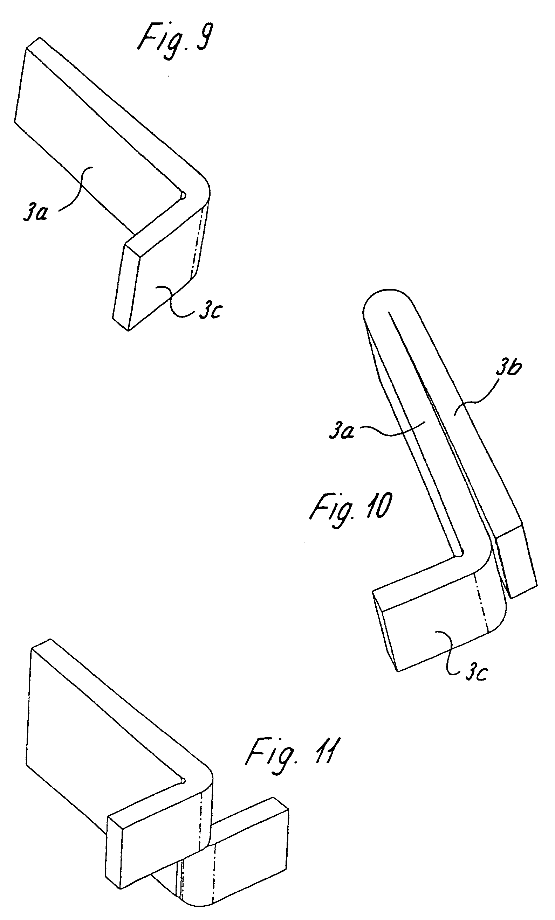

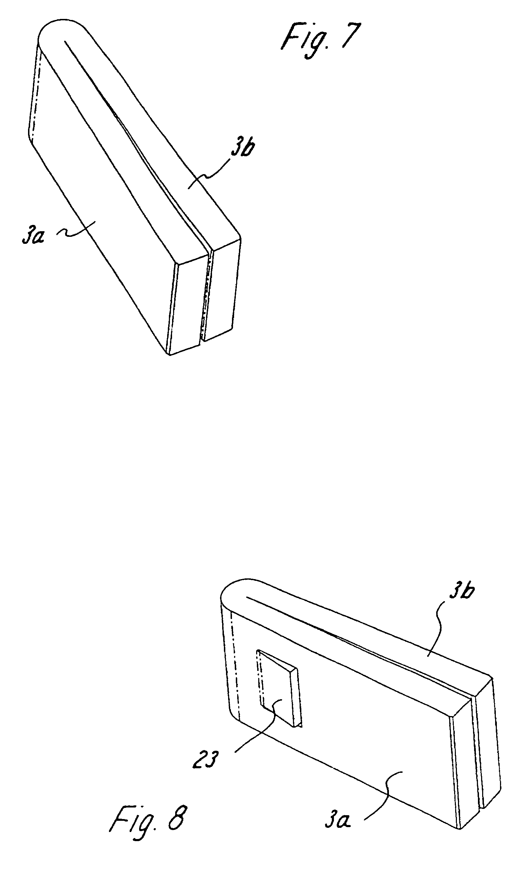

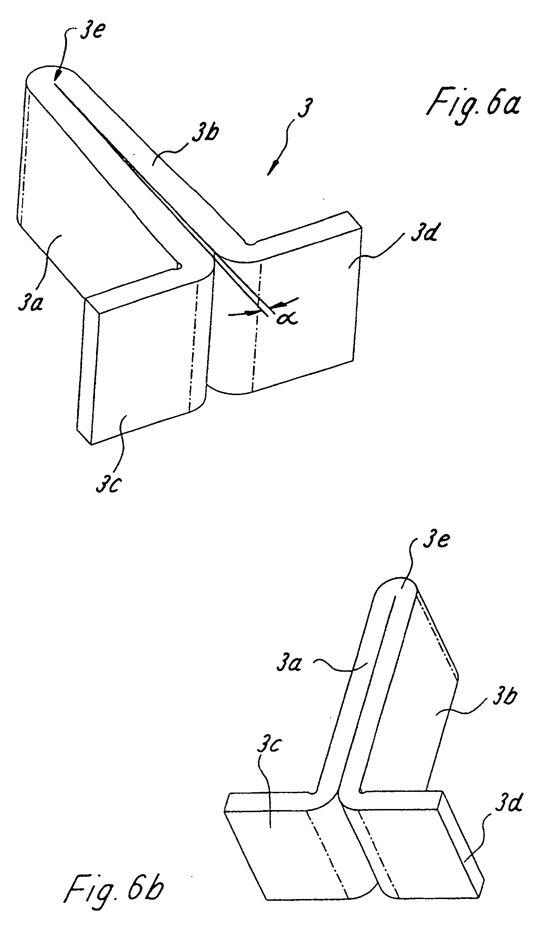

Fig. 9 bis 11 zeigen weitere Varianten der Erfindung. So wird nach Fig 9 ein zu einem "L" geformter Blechstreifen als Zwischenelement 3 verwendet, wobei der Grundabschnitt 3a des L die axiale Sicherung zu einer Seite hin übernimmt (diese Ausführungsform übernimmt von den Elementen der Fig. 6 die Abschnitte 3a und 3c). Durch die eingesparte Auffalzung ist der Ausgleich von Maßtoleranzen etwas eingeschränkter als nach Fig. 6 bis 8. Nach Fig. 10 wird daher der Beinabschnitt des L alternativ doch aufgefaltet ausgelegt (diese Ausführungsform übernimmt von den Elementen der Fig. 6 die Abschnitte 3a, 3b und 3c). Nach Fig. 11 ist dagegen die Grundseite 3c des L zu einer T-Form aufgespalten. was die Handhabung und die axiale Sicherung gegenüber Fig. 9 verbessert.

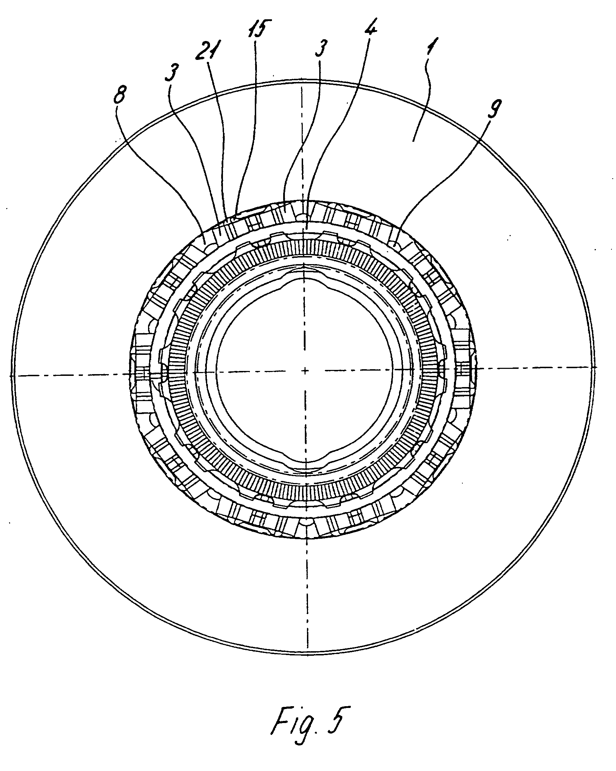

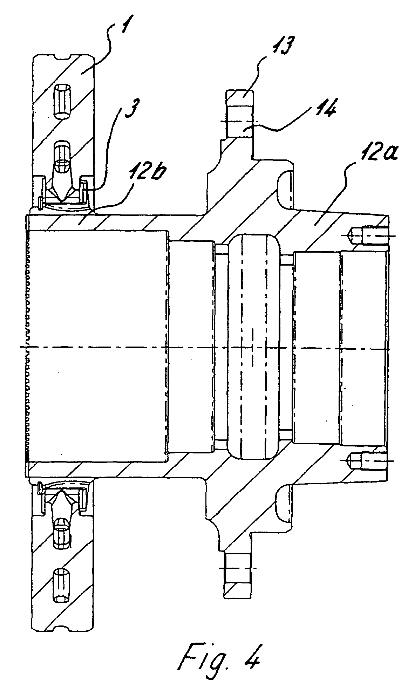

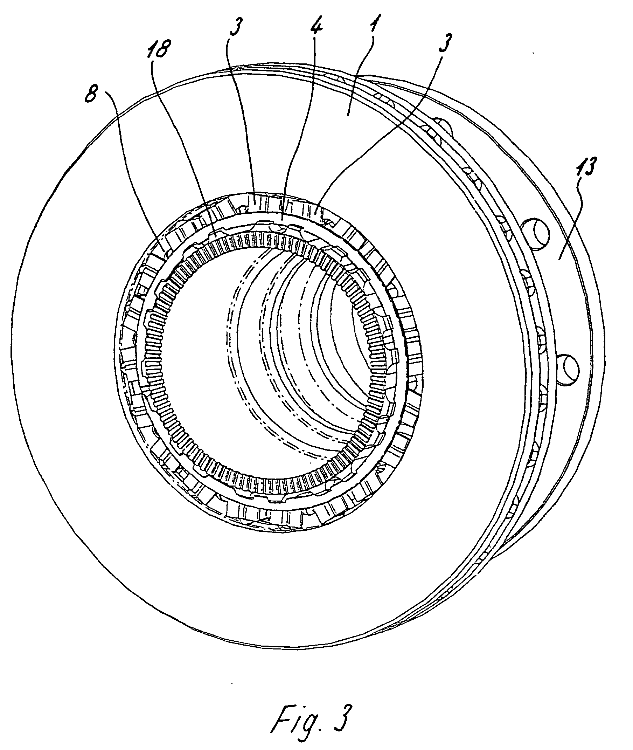

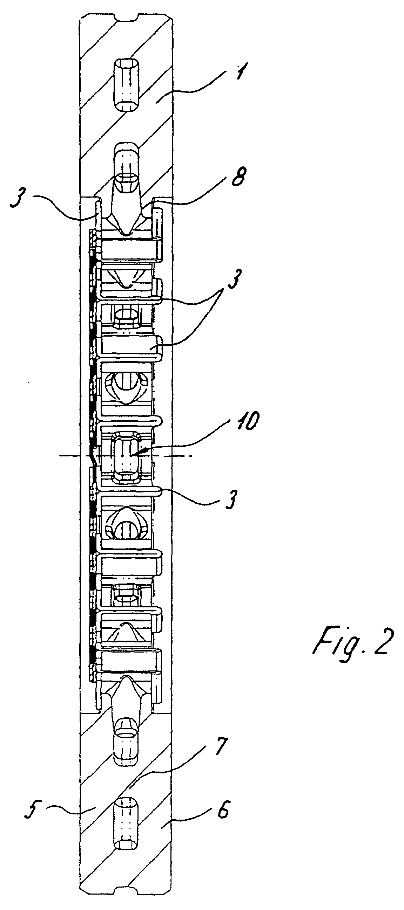

Noch weiter "minimiert" und damit verbilligt werden die Zwischenelemente 3 nach den Ausführungsbeispielen 12 bis 14. Bei diesen Ausführungsbeispielen wird lediglich noch ein rechteckiger Blechstreifenabschnitt 3a als Zwischenelement verwendet, welcher in die Zwischenräume 21 geschoben wird. Nach Fig. 12 erfolgt die axiale Sicherung in einer Richtung wieder durch eine Schnappnase 23. Fig. 13 veranschaulicht eine Art Buckel oder Spitze 24 am Blechstreifen 3a. welcher dazu ausgelegt ist, in eine entsprechende Nut (nicht dargestellt) in der Nabe 2 einzugreifen. Zum Einbau muß dieses Element gekippt werden. Ein zusätzlicher Sprengring in der Nabe oder durch alle Zwischenelemente hindurch verhindert dann ein Kippen der Elemente und fixiert sie in deren Position. Nach Fig. 14 hat das Zwischenelement an einer seiner Seiten eine Art Nase 25. Das Zwischenelement stützt sich mit dieser an der Nabe 2 ab und wird zusätzlich durch einen Sprengring 4 gesichert.

### Bezugszeichenliste

- Bremsscheibe: 1
- Scheibennabe: 2
- Zwischenelemente: 3
- Sicherungsring: 4
- Reibringe: 5, 6
- Stege: 7
- Abstützelemente: 8
- Öffnungen: 9
- Luftspalt: 10
- Ausnehmungen: 11
- hohlzylindrischer Abschnitt: 12
- scheibenartiger Abschnitt: 13
- Bohrungen: 14
- Nocken: 15
- Luftkanal: 16
- Öffnung: 17
- Ansatz: 18
- Ringnut: 19
- Bund: 20
- Zwischenräume: 21
- Bund: 22
- Schnappnase: 23
- Buckel: 24
- Nase: 25

## Patentansprüche

1. Bremsscheiben-Nabenkombination mit einer Scheiben-/Nabenverbindung zur Verbindung einer Bremsscheibe (1) mit einer Bremsscheibennabe (2), mit folgender Ausbildung:
a) die Bremsscheibe (1) weist an ihrem inneren Umfangbereich Abstützelemente (8) auf,
b) die Bremsscheibennabe (2) ist am äußeren Umfang mit Nocken (15) versehen,
c) radial zwischen der Bremsscheibennabe (2) und der Bremsscheibe (1) sind in Umfangsrichtung Zwischenelemente (3) verteilt, welche in sich zwischen Nocken (15) und Abstützelemente (8) in Umfangsrichtung erstreckende Zwischenräume (21) ragen und damit eine Übertragung des Bremsmomentes von der Bremsscheibe (1) auf die Bremsscheibennabe (2) gewährleisten,
**dadurch gekennzeichnet, daß**
d) die Zwischenelemente (3) im wesentlichen streifenförmig, - I-förmig, L-förmig oder T-förmig - ausgebildet sind und wenigstens durch einen Sprengring (4) und/oder einen Bundabschnitt der Bremsscheibennabe (2) axial gegen Ausfallen gesichert sind.

2. Bremsscheiben-Nabenkombination nach Anspruch 1, **dadurch gekennzeichnet, daß** zumindest die in die Zwischenräume (21) ragenden Abschnitte (3a, 3b) der Zwischenelemente (3) V-förmig gefaltet ausgebildet sind.

3. Bremsscheiben-Nabenkombination nach Anspruch 1 oder 2, **dadurch gekennzeichnet, daß** die gefalteten Abschnitte (3a, 3b) der Zwischenelemente (3) federnd vorgespannt ausgebildet sind.

4. Bremsscheiben-Nabenkombination nach Anspruch 1, 2 oder 3, **dadurch gekennzeichnet, daß** in den im Bereich der Faltung des Zwischenelements (3) ausgebildeten Zwischenspalt ein Wärmedämmelement eingesetzt ist.

5. Bremsscheiben-Nabenkombination nach einem der vorstehenden Ansprüche,
**dadurch gekennzeichnet, daß** die streifenförmigen Zwischenelemente (3) als Blechformteile ausgebildet sind.

6. Bremsscheiben-Nabenkombination nach einem der vorstehenden Ansprüche, **dadurch gekennzeichnet, daß** die streifenförmigen Zwischenelemente (3) beidseits der Bremsscheibe (1) durch jeweils einen der Sprengringe (4) axial gesichert sind.

7. Bremsscheiben-Nabenkombination nach einem der vorstehenden Ansprüche, **dadurch gekennzeichnet, daß** die Sprengringe (4) in umlaufende Nuten (19) der Bremsscheibennabe (2) eingreifen.

8. Bremsscheiben-Nabenkombination nach einem der vorstehenden Ansprüche, **dadurch gekennzeichnet, daß** die Zwischenelemente (3) jeweils mit einem Vorsprung versehen sind, der vorzugsweise zum Eingriff/Hintergriff einer mit dem Vorsprung (23, 24, 25) zusammenwirkenden Ausnehmung, Hinterschneidung oder Nut an der Bremsscheibennabe (2) ausgelegt ist.

9. Bremsscheiben-Nabenkombination nach einem der vorstehenden Ansprüche, **dadurch gekennzeichnet, daß** die Sicherung der Zwischenelemente (3) in einer oder in beiden axialen Richtungen durch einen der Sprengringe (4) und in der anderen Richtung durch den Vorsprung (23, 24, 25) erfolgt.

10. Bremsscheiben-Nabenkombination nach einem der vorstehenden Ansprüche, **dadurch gekennzeichnet, daß** die Sicherung der Zwischenelemente (3) in beiden axialen Richtungen durch einen durch Nuten in den Nocken (15) der Bremsscheibennabe (2) und durch Nuten oder Ausnehmungen der Zwischenelemente (3) hindurchgeführten, umlaufenden Sprengring erfolgt.

11. Bremsscheiben-Nabenkombination nach einem der vorstehenden Ansprüche, **dadurch gekennzeichnet, daß** die Vorsprünge der Zwischenelemente (3) als federnde Schnappnasen (23) ausgebildet ist.

12. Bremsscheiben-Nabenkombination nach einem der vorstehenden Ansprüche, **dadurch gekennzeichnet, daß** die Zwischenelemente (3) aus einem druckfesten Material bestehen, welche eine geringere Wärmeleitfähigkeit als die Bremsscheibe aufweist.

13. Bremsscheiben-Nabenkombination nach einem der vorstehenden Ansprüche, **dadurch gekennzeichnet, daß** die Zwischenelemente (3) aus nicht rostendem Stahl bestehen.

14. Bremsscheiben-Nabenkombination nach einem der vorstehenden Ansprüche, **dadurch gekennzeichnet, daß** wenigstens einer der Nocken 815) der Bremsscheibennabe (2) mit einem radial nach außen vorstehenden Bund (20) versehen ist, welcher mit einem Ansatz (22) der Bremsscheibe (1) zusammenwirkt.

15. Bremsscheiben-Nabenkombination nach einem der vorstehenden Ansprüche, **dadurch gekennzeichnet, daß** die Bremsscheibe ein- oder mehrteilig und/oder gebrochen ausgebildet ist.

16. Zwischenelemente für eine Bremsscheiben-Nabenkombination nach einem der vorstehenden Ansprüche, **dadurch gekennzeichnet, daß** die Zwischenelemente (3) im wesentlichen streifenförmig, - I-förmig, L-förmig oder T-förmig - ausgebildet sind und wenigstens durch einen Sprengring (4) und/oder einen Bundabschnitt der Bremsscheibennabe (2) axial gegen Ausfallen gesichert sind.

## Claims

1. A brake disk/hub combination having a disk/hub connection to connect a brake disk (1) to a brake disk hub (2) of the following design:
a) the brake disk (1) has support elements (8) around its inner periphery,
b) the brake disk hub (2) is provided with cams (15) around its outer periphery,
c) distributed radially in the peripheral direction between the brake disk hub (2) and the brake disk (1) are intermediate elements (3) which project into intermediate spaces (21) extending between the cams (15) and the support elements (8) and thereby guarantee the transmission of braking torque from the brake disk (1) to the brake disk hub (2),
**characterised in that**
d) the intermediate elements (3) are essentially of strip-, I-, L- or T-shaped design and are secured axially against falling out at least by a retainer ring (4) and/or a shoulder section of the brake disk hub (2).

2. A brake disk/hub combination in accordance with claim 1,
**characterised in that**
at least the sections (3a, 3b) of the intermediate elements (3) projecting into the intermediate spaces (21) are folded into a V-shape.

3. A brake disk/hub combination in accordance with claim 1 or 2,
**characterised in that**
the folded sections (3a, 3b) of the intermediate elements (3) are spring-biased.

4. A brake disk/hub combination in accordance with claim 1, 2 or 3,
**characterised in that**
a heat insulating element is inserted into the intermediate gap in the area of the fold in the intermediate element (3).

5. A brake disk/hub combination in accordance with one of the preceding claims,
**characterised in that**
the strip-shaped intermediate elements (3) are designed as sheet preforms.

6. A brake disk/hub combination in accordance with one of the preceding claims,
**characterised in that**
the strip-shaped intermediate elements (3) are secured axially on either side of the brake disk (1) by means of one of the retainer rings (4).

7. A brake disk/hub combination in accordance with one of the preceding claims,
**characterised in that**
the retainer rings (4) engage in peripheral grooves (19) in the brake disk hub (2).

8. A brake disk/hub combination in accordance with one of the preceding claims,
**characterised in that**
the intermediate elements (3) are each provided with a projection which is preferably designed to engage in/behind a recess, undercut or groove on the brake disk hub (2) with co-operates with the projection (23, 24, 25).

9. A brake disk/hub combination in accordance with one of the preceding claims,
**characterised in that**
the intermediate elements (3) are secured in one or both axial directions by one of the retainer rings (4) and in the other direction by the projection (23, 24, 25).

10. A brake disk/hub combination in accordance with one of the preceding claims,
**characterised in that**
the intermediate elements (3) are secured in both axial directions by a peripheral retainer ring (4) which passes through grooves in the cams (15) of the brake disk hub (2) and through grooves or recesses in the intermediate elements (3).

11. A brake disk/hub combination in accordance with one of the preceding claims,
**characterised in that**
the projections on the intermediate elements (3) are designed as spring snap noses (23).

12. A brake disk/hub combination in accordance with one of the preceding claims,
**characterised in that**
the intermediate elements (3) are made of a compression-proof material which has a lower heat conductivity than the brake disk.

13. A brake disk/hub combination in accordance with one of the preceding claims,
**characterised in that**
the intermediate elements (3) are made of non-rusting steel.

14. A brake disk/hub combination in accordance with one of the preceding claims,
**characterised in that**
at least one of the cams (15) on the brake disk hub (2) is provided with a radially outward projecting shoulder (20) which co-operates with a lug (22) on the brake disk (1).

15. A brake disk/hub combination in accordance with one of the preceding claims,
**characterised in that**
the brake disk is designed in one or several pieces or as a split brake disk.

16. Intermediate elements for a brake disk/hub combination in accordance with one of the preceding claims,
**characterised in that**
the intermediate elements (3) are essentially strip-, I-, L- or T-shaped in design and are secured axially against falling out at least by a retainer ring (4) and/or a shoulder section on the brake disk hub (2).

## Revendications

1. Combinaison disque/moyeu de frein, comprenant un assemblage disque/moyeu pour assembler un disque (1) de frein à un moyeu (2) de disque de frein, ayant la conception suivante :
a) le disque (1) de frein comporte des éléments (8) de soutien sur sa région de pourtour intérieur,
b) le moyeu (2) de disque de frein est pourvu d'ergots (15) sur son pourtour extérieur,
c) des éléments (3) intermédiaires sont répartis, dans la direction du pourtour, radialement entre le moyeu (2) de disque de frein et le disque (1) de frein, éléments qui dépassent dans des espaces (21) intermédiaires s'étendant dans la direction du pourtour entre les ergots (15)et les éléments (8) de soutien et assurent ainsi une transmission du couple de freinage du disque (1) de frein sur le moyeu (2) de disque de frein,
**caractérisée en ce que**
d) les éléments (3) intermédiaires sont réalisés essentiellement en forme de bande, en forme de I, en forme de L ou en forme de T et sont assujettis axialement, pour les empêcher de tomber, au moins par un jonc (4) d'arrêt et/ou par une partie formant collet du moyeu (2) de disque de frein.

2. Combinaison disque/moyeu de frein suivant la revendication 1, **caractérisée en ce qu'**au moins les parties (3a, 3b) des éléments (3) intermédiaires qui dépassent dans les espaces (21) intermédiaires sont réalisées repliées en V.

3. Combinaison disque/moyeu de frein suivant la revendication 1 ou 2, **caractérisée en ce que** les parties (3a, 3b) repliées des éléments (3) intermédiaires sont réalisées à précontrainte élastique.

4. Combinaison disque/moyeu de frein suivant la revendication 1, 2 ou 3, **caractérisée en ce qu'**un élément d'isolation thermique est inséré dans la fente intermédiaire formée dans la région du pli de l'élément (3) intermédiaire.

5. Combinaison disque/moyeu de frein suivant l'une des revendications précédentes, **caractérisée en ce que** les éléments (3) intermédiaires en forme de bande sont réalisés sous la forme de pièces façonnées en tôle.

6. Combinaison disque/moyeu de frein suivant l'une des revendications précédentes, **caractérisée en ce que** les éléments (3) intermédiaires en forme de bande sont assujettis axialement par un jonc (4) d'arrêt respectif de part et d'autre du disque (1) de frein.

7. Combinaison disque/moyeu de frein suivant l'une des revendications précédentes, **caractérisée en ce que** les joncs (4) d'arrêt s'engagent dans des rainures (19) faisant le tour du moyeu (2) de disque de frein.

8. Combinaison disque/moyeu de frein suivant l'une des revendications précédentes, **caractérisée en ce que** les éléments (3) intermédiaires sont respectivement pourvus d'une saillie, qui est de préférence conçue pour venir en prise/en prise arrière avec un évidement, une contre-dépouille ou une rainure, prévu(e) sur le moyeu (2) de disque de frein et coopérant avec la saillie (23, 24, 25).

9. Combinaison disque/moyeu de frein suivant l'une des revendications précédentes, **caractérisée en ce que** l'assujettissement des éléments (3) intermédiaires s'effectue dans une direction axiale, ou dans les deux directions axiales, par un des joncs (4) d'arrêt, et dans l'autre direction par la saillie (23, 24, 25).

10. Combinaison disque/moyeu de frein suivant l'une des revendications précédentes, **caractérisée en ce que** l'assujettissement des éléments (3) intermédiaires dans les deux directions axiales s'effectue par un jonc d'arrêt faisant le tour et, passant dans des rainures dans les ergots (15) du moyeu (2) de disque de frein et dans des rainures ou des évidements des éléments (3) intermédiaires.

11. Combinaison disque/moyeu de frein suivant l'une des revendications précédentes, **caractérisée en ce que** les saillies des éléments (3) intermédiaires sont réalisées sous forme de becs (23) d'encliquetage à effet de ressort.

12. Combinaison disque/moyeu de frein suivant l'une des revendications précédentes, **caractérisée en ce que** les éléments (3) intermédiaires sont réalisés en un matériau résistant à la pression, qui possède une conductibilité thermique inférieure à celle du disque de frein.

13. Combinaison disque/moyeu de frein suivant l'une des revendications précédentes, **caractérisée en ce que** les éléments (3) intermédiaires sont réalisés en acier inoxydable.

14. Combinaison disque/moyeu de frein suivant l'une des revendications précédentes, **caractérisée en ce qu'**au moins un des ergots (15) du moyeu (2) de disque de frein est pourvu d'un collet (20) faisant saillie radialement vers l'extérieur, qui coopère avec un épaulement (22) du disque (1) de frein.

15. Combinaison disque/moyeu de frein suivant l'une des revendications précédentes, **caractérisée en ce que** le disque de frein est réalisé fractionné et/ou en une ou plusieurs parties.

16. Eléments intermédiaires pour une combinaison disque/moyeu de frein suivant l'une des revendications précédentes, **caractérisés en ce que** les éléments (3) intermédiaires sont réalisés essentiellement en forme de bande, en forme de I, en forme de L ou en forme de T et sont assujettis axialement, pour les empêcher de tomber, au moins par un jonc (4) d'arrêt et/ou par une partie formant collet du moyeu (2) de disque de frein.
